(19) Europäisches Patentamt

European Patent Office

Office européen des brevets

(11) **EP 1 672 859 A2**

(12) **EUROPEAN PATENT APPLICATION**

(43) Date of publication:
**21.06.2006 Bulletin 2006/25**

(51) Int Cl.:
**H04L 27/26** (2006.01)

(21) Application number: **05005529.2**

(22) Date of filing: **14.03.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **20.12.2004 JP 2004367761**

(71) Applicant: **FUJITSU LIMITED**
**Kawasaki-shi,**
**Kanagawa 211-8588 (JP)**

(72) Inventors:
• **Hamada, Hajime,**
**c/o Fujitsu Limited**
**Kawasaki-shi,**
**Kanagawa 211-8588 (JP)**
• **Kubo, Tokuro,**
**c/o Fujitsu Limited**
**Kawasaki-shi,**
**Kanagawa 211-8588 (JP)**

• **Nagatani, Kazuo,**
**c/o Fujitsu Limited**
**Kawasaki-shi,**
**Kanagawa 211-8588 (JP)**
• **Ishikawa, Hiroyoshi,**
**c/o Fujitsu Limited**
**Kawasaki-shi,**
**Kanagawa 211-8588 (JP)**
• **Fudaba, Nobukazu,**
**c/o Fujitsu Limited**
**Kawasaki-shi,**
**Kanagawa 211-8588 (JP)**

(74) Representative: **HOFFMANN EITLE**
**Patent- und Rechtsanwälte**
**Arabellastrasse 4**
**81925 München (DE)**

(54) **Peak reduction for multicarrier transmission**

(57) A multicarrier signal transmission apparatus able to adjust the balance between the quality of reception and generation of an out-band spurious wave by a simple configuration, comprising a peak detector for detecting a peak part of a transmitted multicarrier signal, a window function generator for generating a window function of an amplitude in accordance with a peak level of a detected peak part, and a peak suppressor for attenuating the peak part in accordance with the value of the generated window function, and a multicarrier signal receiving apparatus, multicarrier signal transmission method, multicarrier signal receiving method, and communication system used with the same.

FIG.1

**Description**

BACKGROUND OF THE INVENTION

1. Field of the Invention

The present invention relates to a transmission/receiving apparatus, transmission/receiving method, and communication system for a multicarrier signal combining a plurality of modulated signals, more particularly relates to a transmission/receiving apparatus, transmission/receiving method, and communication system for suppressing the peak power of a multicarrier signal to improve a peak-to-average power ratio (PAPR).

2. Description of the Related Art

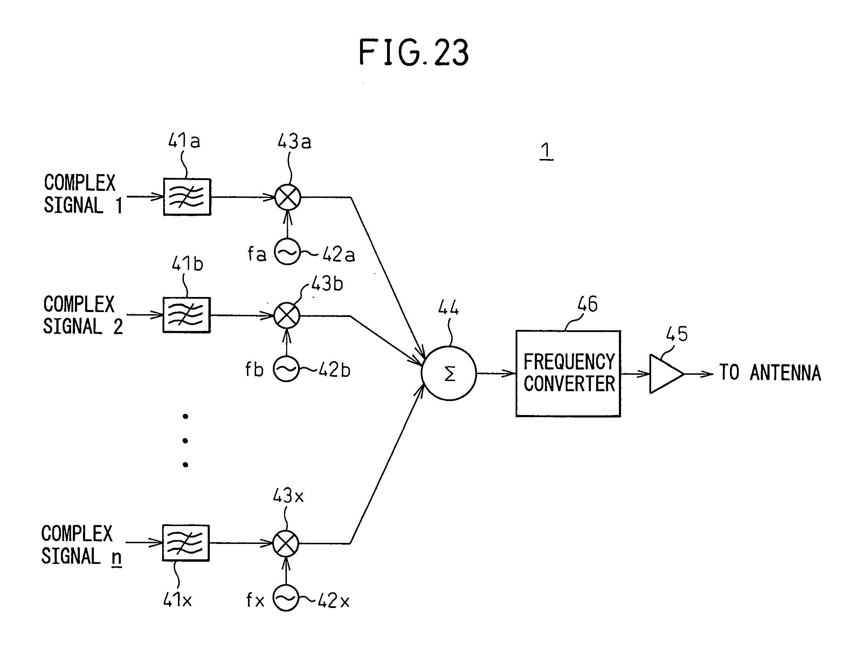

Digital wireless communication systems use multicarrier modulation schemes for combining a plurality of band-limited carrier signals and transmitting them by a high frequency carrier. FIG. 23 is a schematic view of the configuration of a digital wireless transmission apparatus for multicarrier modulation.

As illustrated, the transmission apparatus 1 limits the bands of a plurality of digital baseband signals comprised of the complex signal 1, complex signal 2... complex signal $\underline{n}$, by the band-limiting filters 41a, 41b... 41x. After this, sine wave generators 42a, 42b... 42x generate different frequency fa, fb... fx composite sine waves $e^{j\omega t}$ ($\omega=2\pi fa$, $2\pi fb$... $2\pi fx$), while complex multipliers 43a, 43b... 43x multiply the same with the complex signal 1, complex signal 2... complex signal $\underline{n}$ to shift them to the arbitrary frequencies.

Further, the band-limited and frequency-shifted complex signal 1 to complex signal $\underline{n}$ are combined by a multicarrier combiner 44. The combined multicarrier signal is converted by a frequency converter 46 to the wireless frequency band, amplified through a transmission amplifier 45 to the desired transmission power, then transmitted by a not shown antenna unit.

In the currently used digital wireless communication systems, linear amplification is required at the transmission amplifier at the transmitting end. The transmission amplifier is therefore used in the linear region where the input power and output power are substantially proportional in relationship.

Further, in a digital wireless communication system, a multicarrier modulation scheme combining a plurality of band-limited carrier signals and transmitting them by a high frequency carrier is used. In general, however, if combining a plurality of carrier signals at the transmitting end of wireless transmission, the peak-to-average power ratio (PAPR) of the obtained multicarrier signal becomes large. Therefore, the transmission amplifier of the transmitting end employing the multicarrier modulation scheme has to be designed with a large backoff power to enable operation in the linear region even for an input signal with a large peak-to-average power ratio (PAPR). The efficiency of the amplifier therefore drops. That is, a larger amount of consumed power is used for the same transmission power.

Roughly classifying the methods for suppressing the peak parts of a multicarrier signal proposed in the past to prevent such an increase in the peak-to-average power ratio (PAPR), the following three types may be mentioned.

The first peak suppression method is the method of attenuating the plurality of modulated signals to be combined before multicarrier combination so as to suppress the peaks of the multicarrier signal (for example, Japanese Unexamined Patent Publication (Kokai) No. 2002-305489, Japanese Unexamined Patent Publication (Kokai) No. 2003-46480, Japanese Unexamined Patent Publication (Kokai) No. 2004-64711, and Japanese Unexamined Patent Publication (Kokai) No. 11-313042). For example, Japanese Unexamined Patent Publication (Kokai) No. 2002-305489 discloses the method of simulating the multicarrier signal obtained by combining a plurality of modulated signals so as to detect the peak parts and attenuating the parts corresponding to the detected peak parts in the plurality of modulated signals.

The second peak suppression method is a hard clip type peak suppression method after multicarrier combination. It cuts the parts exceeding a certain threshold of amplitude in the obtained multicarrier signal.

Further, the third peak suppression method is a method of suppressing the peak parts of a multicarrier signal using a filter after multicarrier combination.

In addition, Japanese Unexamined Patent Publication (Kokai) No. 2004-128923 discloses a method of determining a target value for suppressing the peak voltage of an input signal based on an envelope level of the input signal and a predetermined threshold and calculating the gain with respect to the input signal from the results of passing the product of the envelope level and target value and the square of the envelope through a moving average filter or FIR filter.

Japanese Unexamined Patent Publication (Kokai) No. 7-321861 discloses a method of limiting the amplitude to an amplitude level preset for the multicarrier signal, then generating an interpolated waveform, so as to limit the band.

Japanese Unexamined Patent Publication (Kokai) No. 2002-77097 discloses a method of suppression comprising evenly suppressing the multicarrier signal as a whole and clipping only the parts generating peak voltages.

Japanese Unexamined Patent Publication (Kokai) No. 2004-135087 discloses a method of applying an inverse Fourier transform to a carrier to obtain a basic function in a multicarrier modulation scheme and subtracting the signals of the products of the waveform of this basic function shifted to a peak position of an orthogonal amplitude signal and peak parts exceeding the threshold in the orthogonal amplitude signal from the orthogonal amplitude signal to suppress the peak parts.

In the first peak suppression method, there is the advantage that it is possible to suppress the generation of a spurious wave outside the signal band since the peak suppression is performed before the band-limiting filter, however, there is the problem that since the peak suppression is performed on the modulated signals before multicarrier combination, the loss in the amount of information due to the suppression becomes large and a deterioration of the quality of reception is caused.

In the second peak suppression method, it is possible to suppress the signal loss due to peak suppression to a minimum, but there is the problem that a high frequency component occurs in the multicarrier signal and a spurious wave outside of the band ends up being generated.

Further, in the third peak suppression method, however, there is the problem that the size of the circuit becomes larger due to the provision of the filter.

## SUMMARY OF THE INVENTION

An object of the present invention is to provide a multicarrier signal transmission/receiving apparatus and transmission/receiving method able to be realized by a simple configuration and able to adjust the balance between the quality of reception and the generation of an out-band spurious wave.

To achieve the above object, according to the prevent invention, a multicarrier signal transmission apparatus detects a peak part of a multicarrier signal which is obtained by combining a plurality of band-limiting modulated signals, and generates a window function of an amplitude in accordance with a peak level of the peak part, and attenuates the peak part in accordance with the value of the window function.

## BRIEF DESCRIPTION OF THE DRAWINGS

These and other objects and features of the present invention will become clearer from the following description of the preferred embodiments given with reference to the attached drawings, wherein:

FIG. 1 is a view of the basic configuration of the present invention;
FIG. 2 is a view of an example of a window function generated by a window function generator;
FIG. 3A is a view of a multicarrier signal before peak suppression in peak suppression of a multicarrier signal according to the present invention;
FIG. 3B is a view of window functions multiplied with peak parts of the multicarrier signal of FIG. 3A in peak suppression of a multicarrier signal according to the present invention;
FIG. 3C is a view of a multicarrier signal after being multiplied with the window functions of FIG. 3B in peak suppression of a multicarrier signal according to the present invention;
FIG. 4 is a schematic view of the configuration of a communication system of a multicarrier signal according to a first embodiment of the present invention;
FIG. 5 is a schematic view of the configuration of a multicarrier signal transmission apparatus according to a second embodiment of the present invention;
FIG. 6 is a view of an example of a window function generated by the window function generator shown in FIG. 5;
FIG. 7A is a view of a multicarrier signal before peak suppression in peak suppression of a multicarrier signal of a multicarrier signal transmission apparatus shown in FIG. 5;
FIG. 7B is a view of window functions multiplied with peak parts of the multicarrier signal of FIG. 7A in peak suppression of a multicarrier signal of a multicarrier signal transmission apparatus shown in FIG. 5;
FIG. 7C is a view of a multicarrier signal after being multiplied with the window functions of FIG. 7B in peak suppression of a multicarrier signal of a multicarrier signal transmission apparatus shown in FIG. 5;
FIG. 8 is a schematic view of the configuration of a multicarrier signal transmission apparatus according to a third embodiment of the present invention;
FIG. 9A is a view explaining the timing of generation of a window signal and shows the waveform of a multicarrier signal;
FIG. 9B is a view explaining the timing of generation of a window signal and shows the waveform of a multicarrier signal of FIG. 9A delayed by a delay element;
FIG. 9C is a view explaining the timing of generation of a window signal and shows the generated window signal;
FIG. 10 is a schematic view of the configuration of a multicarrier signal transmission apparatus according to a fourth embodiment of the present invention;
FIG. 11A is a view of a multicarrier signal before peak suppression in peak suppression of a multicarrier signal of a multicarrier signal transmission apparatus shown in FIG. 10;

FIG. 11B is a view of window functions multiplied with peak parts of the multicarrier signal of FIG. 11A in peak suppression of a multicarrier signal of a multicarrier signal transmission apparatus shown in FIG. 10;

FIG. 11C is a view of a multicarrier signal after being multiplied with the window functions of FIG. 11B in peak suppression of a multicarrier signal of a multicarrier signal transmission apparatus shown in FIG. 10;

FIG. 12 is a schematic view of the configuration of a multicarrier signal transmission apparatus according to a fifth embodiment of the present invention;

FIG. 13 is a schematic view of the configuration of a multicarrier signal transmission apparatus according to a sixth embodiment of the present invention;

FIG. 14A is a view explaining the generation of window functions based on symmetry and shows the case of generating all window functions from a 1/2 part of the window functions;

FIG. 14B is a view explaining the generation of window functions based on symmetry and shows the case of generating all window functions from a 1/4 part of the window functions;

FIG. 15 is a schematic view of the configuration of a multicarrier signal transmission apparatus according to a seventh embodiment of the present invention;

FIG. 16A is a view explaining the operation of a multicarrier signal transmission apparatus shown in FIG. 15 and shows a multicarrier signal before peak suppression;

FIG. 16B is a view explaining the operation of a multicarrier signal transmission apparatus shown in FIG. 15 and shows window functions generated in accordance with the multicarrier signal of FIG. 16A;

FIG. 16C is a view explaining the operation of a multicarrier signal transmission apparatus shown in FIG. 15 and shows a multicarrier signal after peak suppression;

FIG. 17 is a schematic view of the configuration of a multicarrier signal transmission apparatus according to an eighth embodiment of the present invention;

FIG. 18 is a schematic view of the configuration of a hard clip suppressor of the transmission apparatus shown in FIG. 17;

FIG. 19 is a schematic view of the configuration of a multicarrier signal transmission apparatus according to a ninth embodiment of the present invention;

FIG. 20 is a schematic view of the configuration of a multicarrier signal transmission apparatus according to a 10th embodiment of the present invention;

FIG. 21 is a schematic view of the configuration of a multicarrier signal transmission apparatus according to an 11th embodiment of the present invention;

FIG. 22 is a schematic view of the configuration of a multicarrier signal receiving apparatus according to a 12th embodiment of the present invention; and

FIG. 23 is a schematic view of the configuration of a conventional transmission apparatus for multicarrier modulation.

DESCRIPTION OF THE PREFERRED EMBODIMENTS

Preferred embodiments of the present invention will be described in detail below while referring to the attached figures.

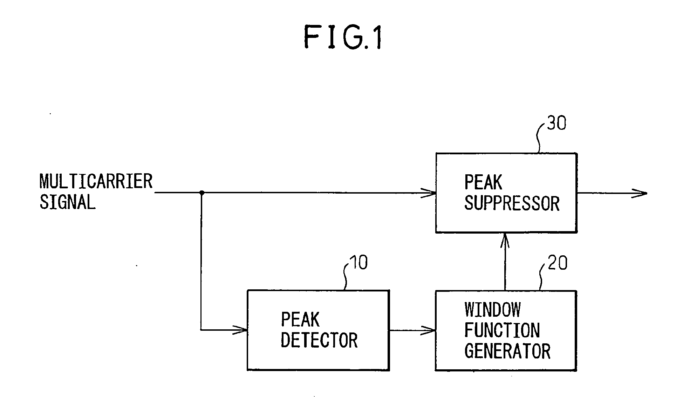

FIG. 1 is a basic view of the configuration of the present invention. The multicarrier signal transmission apparatus according to the present invention is provided with a peak detector 10 comprising a peak detection unit for detecting peak parts of a multicarrier signal sent, a window function generator 20 comprising a window function generation unit for generating window functions of amplitudes in accordance with peak levels of the detected peak parts, and a peak suppressor 30 comprising a peak suppression unit for attenuating the peak parks in accordance with the values of the generated window functions.

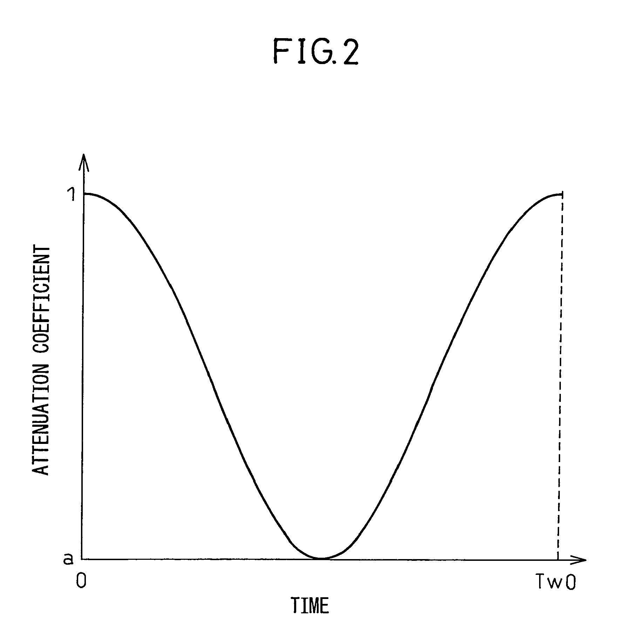

FIG. 2 shows an example of a window function generated by the window function generator 20. Here, the "window function" means a function set with a finite period width Tw0 and determining the amount of attenuation (attenuation coefficient) at each time in a defined region.

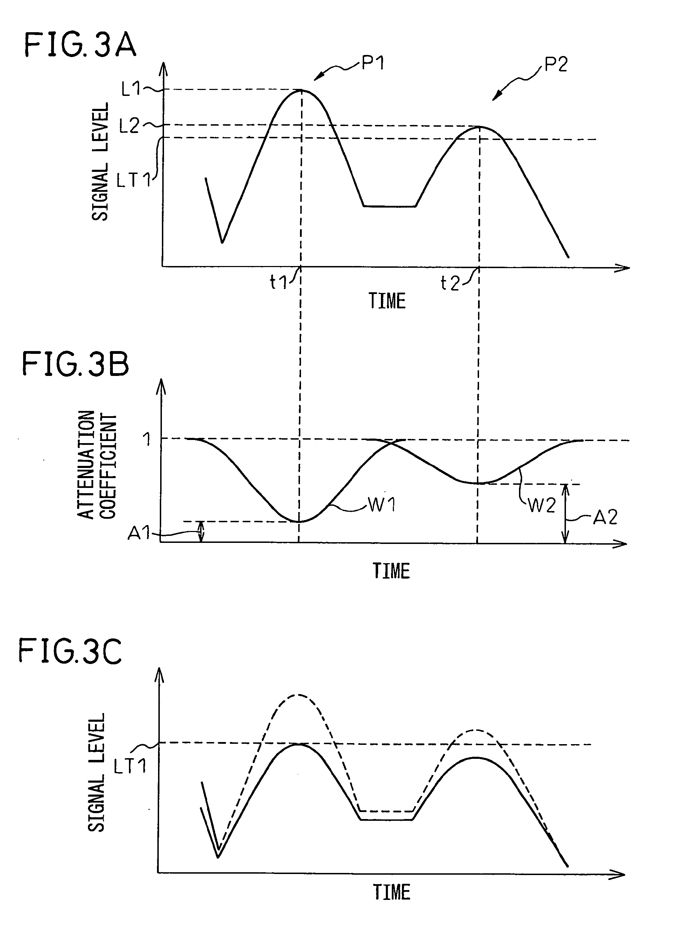

Now, assume that peak parts P1 and P2 having peaks over a predetermined level threshold LT1 appear at times t1 and t2 in the multicarrier signal before peak suppression as shown in FIG. 3A. The peak detector 10 of FIG. 1 detects these peak parts P1 and P2.

Further, the window function generator 20 generates window functions w1 and w2 of amplitudes A1 and A2 in accordance with the peak levels L1 and L2 of the peak parts P1 and P2 as shown in FIG. 3B.

Further, the peak suppressor 30 multiplies these peak parts P1 and P2 of the multicarrier signal with the window functions w1 and w2 so as to attenuate the peak parks P1 and P2 in accordance with the values of the window functions w1 and w2.

By suitably setting the amplitudes of the window functions as explained above, it is possible to suppress the peak levels of the multicarrier signal to below a predetermined level threshold LT1 as shown in FIG. 3C.

According to the method of using window functions to suppress peak parts of the multicarrier signal like in the present invention, by reducing the widths of the window functions, it is possible to reduce the suppressed signal widths and improve the quality of reception, while by increasing the widths of the window functions, it is possible to reduce the out-band spurious wave and improve the adjacent channel leakage power ratio (ACLR). Therefore, the present invention determines the widths of the window functions in accordance with the quality of reception and ACLR requested at the transmitting side to enable adjustment of the balance of the same.

Further, in the means for the peak suppression of a multicarrier signal as in the present invention, if just multiplying window functions with the multicarrier signal, a single multiplier is sufficient, so compared with the method of peak suppression using a filter after multicarrier combination, an extremely small sized circuit configuration can be used for realization.

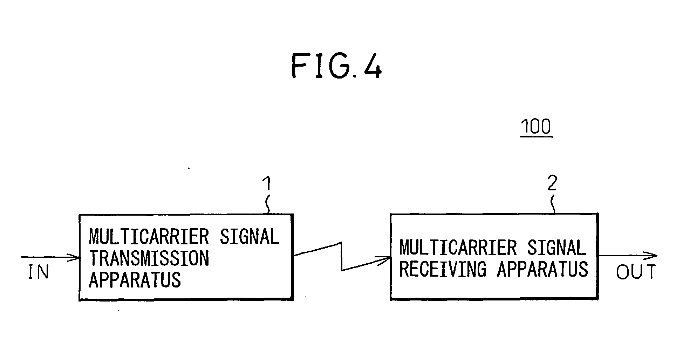

FIG. 4 is a schematic view of the configuration of a communication system of a multicarrier signal according to a first embodiment of the present invention. A multicarrier communication system 100 is provided with a multicarrier signal transmission apparatus 1 explained in detail with reference to the following second embodiment to 10th embodiment and a multicarrier signal receiving apparatus 2 receiving a multicarrier signal sent from the multicarrier signal transmission apparatus 1.

Further, the multicarrier communication system 100 is provided with a multicarrier signal receiving apparatus 2 explained in detail referring to the later 12th embodiment when provided with a multicarrier signal transmission apparatus 1 explained in detail with reference to the later 11th embodiment.

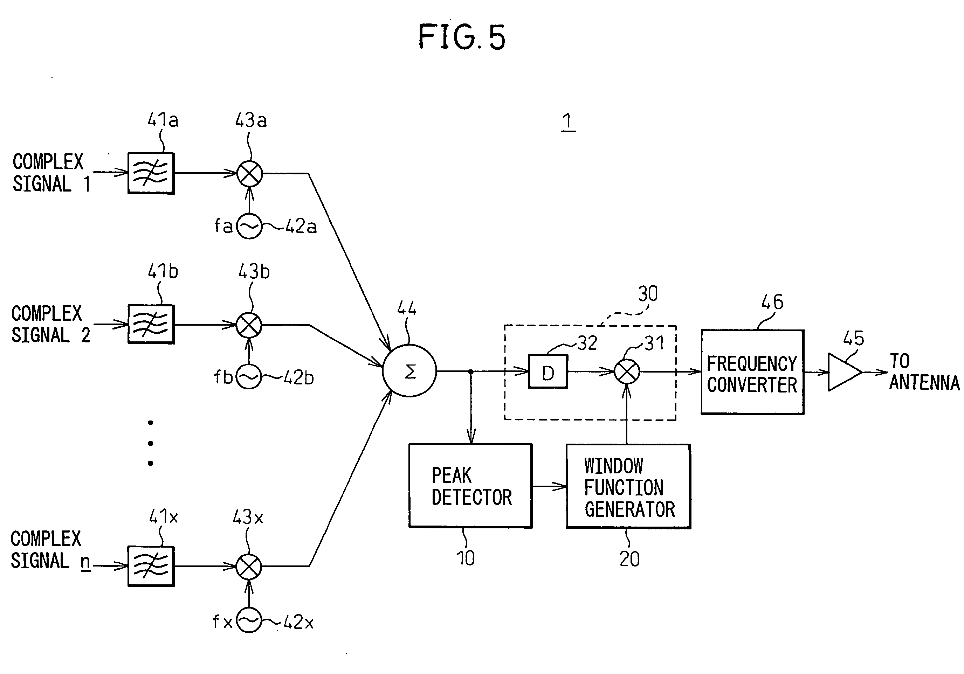

FIG. 5 is a schematic view of the configuration of a multicarrier signal transmission apparatus according to a second embodiment of the present invention. As illustrated, the transmission apparatus 1 over-samples, then limits the bands of the plurality of digital baseband signals comprised by the complex signal 1, complex signal 2... complex signal $n$ by band-limiting filters 41a, 41b... 41x, respectively.

After this, sine wave generators 42a, 42b... 42x generate different frequency fa, fb... fx complex sine waves $e^{j\omega t}$ ($\omega=2\pi fa, 2\pi fb... 2\pi fx$), while complex multipliers 43a, 43b... 43x multiply the same with the complex signal 1, complex signal 2... complex signal $n$ respectively to shift (up convert) them to the arbitrary frequencies.

Further, the complex signal 1 to complex signal $n$ shifted to the frequencies and band limited are combined by a multicarrier combiner 44 into a multicarrier signal.

The peak detector 10 detects the peak levels of peak parts appearing in a multicarrier signal and having peaks over a predetermined level threshold LT and outputs them to the window function generator 20.

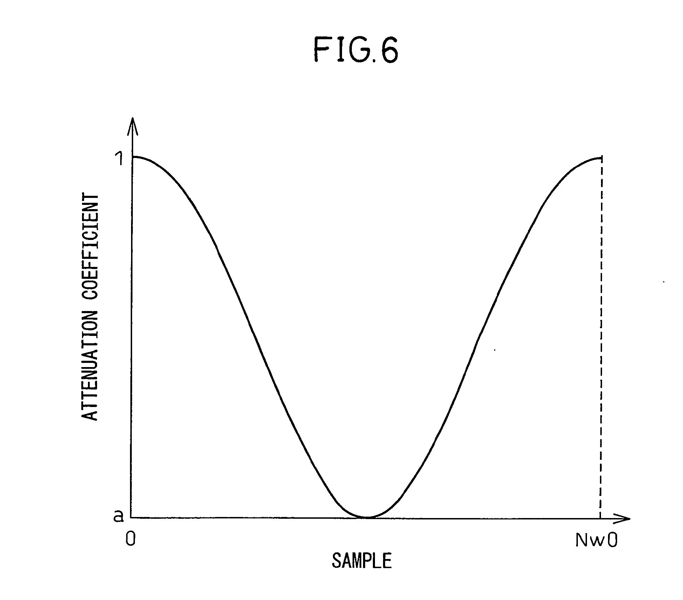

The window function generator 20 generates window functions of amplitudes according to the peak levels of the detected peak parts. FIG. 6 shows an example of a window function generated by the window function generator 20.

As shown in FIG. 6, a "window function" is a function showing the amount of attenuation (attenuation coefficient) at each sample (time) with respect to the multicarrier signal determined in a finite sample number width Nw0. The window function in the example illustrated is a cos window function expressed by the following formula (1):

$$(1-a)*(1+\cos\theta)/2+a \quad (0\leq\theta\leq2\pi/Nw0) \quad (1)$$

Here, if assuming attenuation by the maximum attenuation width 1 [dB] in the Nw0/2th sample, it is sufficient to set a=0.891.

The window function generated by the window function generator 20 is multiplied by the multiplier 31 of the peak suppressor 30 with the multicarrier signal. The delay element 32 of the peak suppressor 30 delays the multicarrier signal by exactly

$$(Nw0/2)*\Delta Ts+Td0 \quad (2)$$

so that the generated window function is multiplied centered on the peak position of the detected peak part. Here, $\Delta Ts$ shows the sampling time of the multicarrier signal, while Td0 is the delay time required for the processing in the peak detector 10 and the window function generator 20.

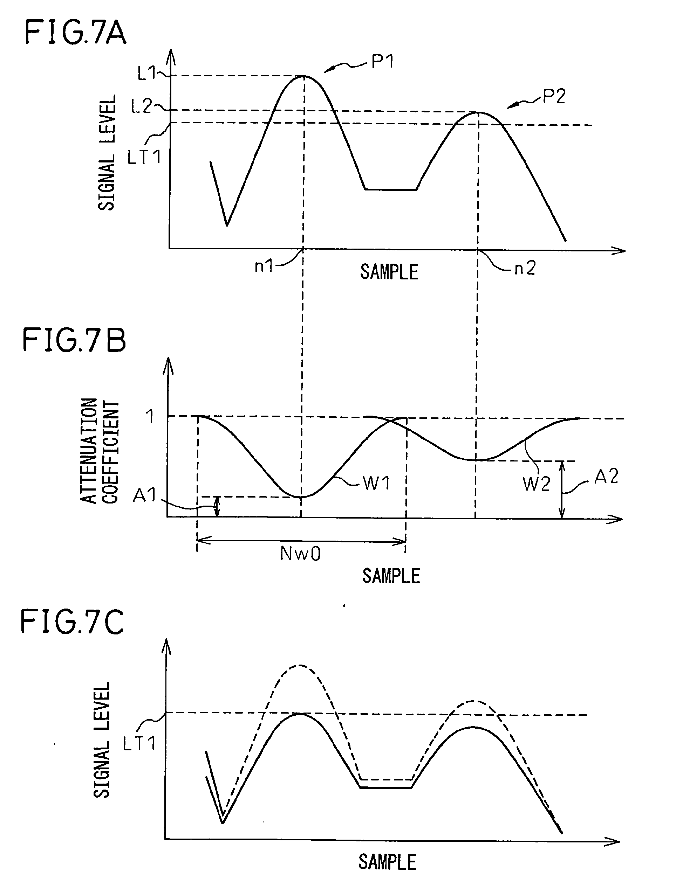

FIG. 7A shows a multicarrier signal before peak suppression, FIG. 7B shows window functions multiplied with the peak parts of the multicarrier signal of FIG. 7A, and FIG. 7C shows a multicarrier signal after multiplication with the window functions of FIG. 7B.

As shown in FIG. 7A, the multicarrier signal before peak suppression is assumed to have peak parts P1 and P2 with peak values exceeding a predetermined level threshold LT1 at the (n1)th sample and (n2)th sample. The peak detector 10 of FIG. 5 detects these peak parts P1 and P2.

Further, the window function generator 20 generates window functions w1 and w2 having amplitudes A1 and A2 proportional to the ratios of the peak levels L1 and L2 of these peak parts P1 and P2 and the level threshold LT1. The generated window functions w1 and w2 are shown in FIG. 7B.

Further, the multiplier 31 of the peak suppressor 30 multiplies the peak parts P1 and P2 of the multicarrier signal with the window functions w1 and w2. At this time, the multicarrier signal is delayed by the delay element 32 by exactly $(Nw0/2)*\Delta Ts+Td0$, so the window functions w1 and w2 are multiplied centered at the peak positions of the peak parts P1 and P2.

Due to this, by suitably setting the amplitudes of the window functions, it is possible to suppress the peak levels of the multicarrier signal to below a predetermined level threshold LT1 as shown in FIG. 7C.

At this time, by setting the widths of the window functions small, the width of the multicarrier signal which is suppressed becomes smaller and the quality of reception is improved, while conversely the suppression causes generation of a high frequency component, whereby an out-band frequency component is generated and the ACLR deteriorates. Conversely, if setting the widths of the window functions large, the ACLR is improved, but the quality of reception deteriorates. Therefore, by suitably setting the widths (number of samples) of the window functions, it is possible to adjust the balance between the quality of reception and the ACLR.

Note that the type of the window functions is not limited to a cos window function. The known $\cos^2$ window function, $\cos^3$ window function, $\cos^4$ window function, Hanning window function, Hamming window function, Kaiser window function, Blackman-Harris window function, etc. may be selectively used in accordance with the type of the transmission signal.

Further, in the above example, the window function generator 20 is assumed to generate window functions having amplitudes proportional to the differences between the peak levels of the peak parts and the level threshold LT1, but the invention is not limited to this. It is also possible to generate window functions having amplitudes proportional to the peak levels of the peak parts. Further, the window function generator 20 may also generate window functions of amplitudes having monotonously increasing relationships with the ratios of the peak levels of the peak parts and the level threshold LT1 or may also generate window functions of amplitudes having monotonously increasing relationships with the peak levels of the peak parts.

Further, the peak suppressor 30 has the multiplier 31 multiply the multicarrier signal with the window functions so as to attenuate the peak parts, but the means for attenuating the multicarrier signal is not limited to this. It is also possible to use means enabling attenuation of the multicarrier signal in accordance with the values of the window functions.

After this, the multicarrier signal suppressed in peak parts by the peak suppressor 30 is converted by the frequency converter 46 to the wireless frequency band, amplified through a transmission amplifier 45 to the desired transmission power, then transmitted from a not shown antenna unit.

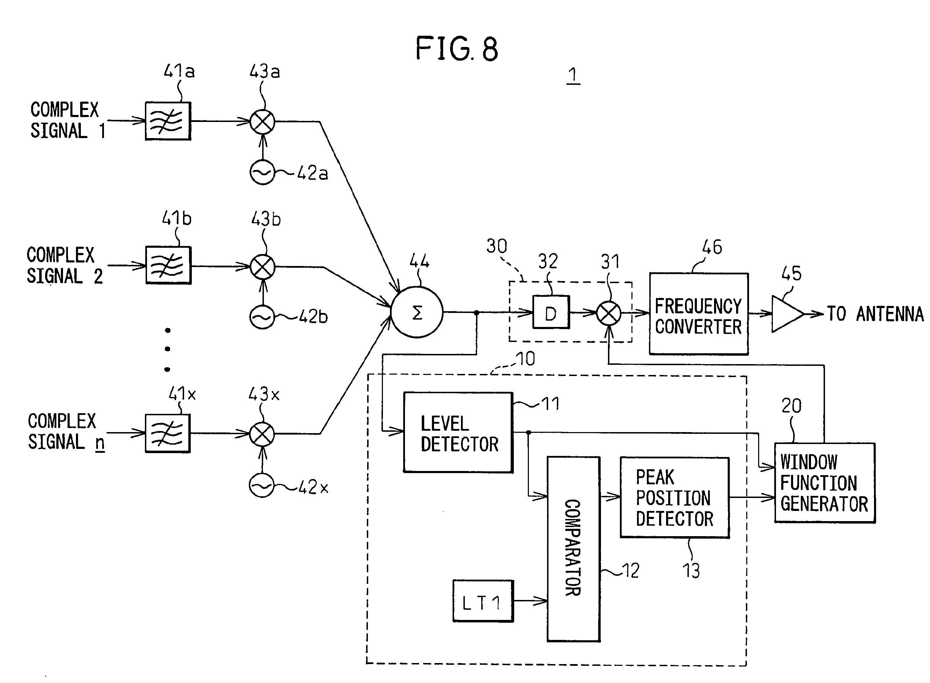

FIG. 8 is a schematic view of the configuration of a multicarrier signal transmission apparatus according to a third embodiment of the present invention. The configuration shown in FIG. 8 shows the configuration of the peak detector 10 in the transmission apparatus 1 shown in FIG. 5 in more detail.

The peak detector 10 is provided with a level detector 11 for detecting the level of a multicarrier signal, a comparator 12 for comparing a detected level and predetermined level threshold LT1, and peak position detector 13 for detecting the peak positions of the signals of the peak parts of the multicarrier signal when the level of the detected multicarrier signal is over the level threshold LT1.

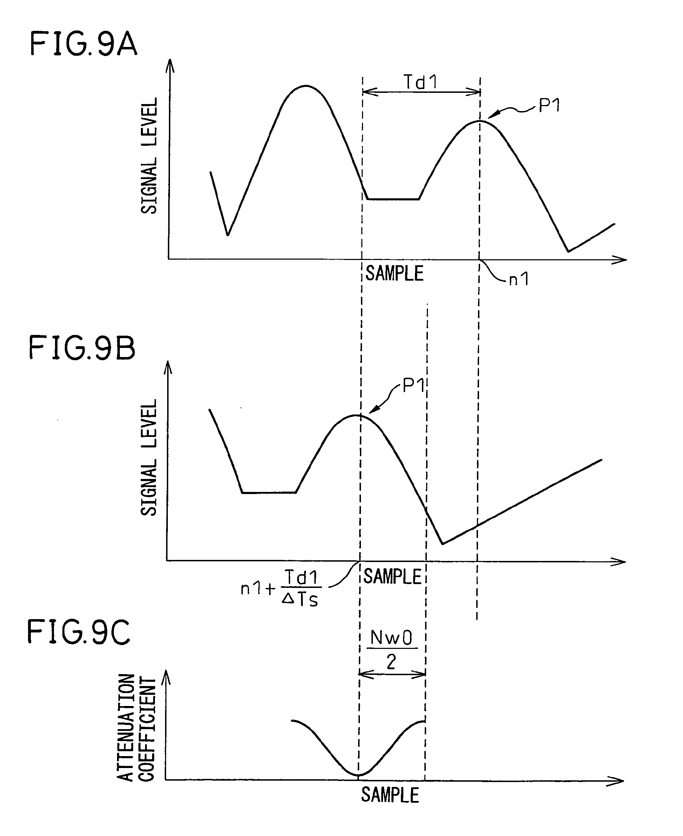

Further, at the point of time when the peak positions are detected, the window function generator 20 determines the amplitudes in accordance with the detection levels, generates window functions matching the timings centered on the peak positions, and multiplies them with the multicarrier signal by the multiplier 31. This state is shown with reference to FIG. 9.

FIG. 9A shows the waveform of the multicarrier signal right after being formed by the multicarrier combiner 44. FIG. 9B shows the waveform of the multicarrier signal delayed by the delay element 32. As illustrated, the delay element 32 is set so as to delay the multicarrier signal by exactly the predetermined time Td1.

If the level detector 11 and comparator 12 detect the peak position P1 and the peak position detector 13 determines that the peak position of the peak part P1 is the (n1)th sample, as shown in FIGS. 9B and 9C, the window function generator 20 generates a window function centered on the $(n1+(Td1/\Delta Ts))$th sample. Therefore, when making the width of the window function generated Nw0, the window function generator 20 starts the generation of the window function after the elapse of exactly the time $(Td1-(Nw0/2*\Delta Ts))$ after detection of the (n1)th sample.

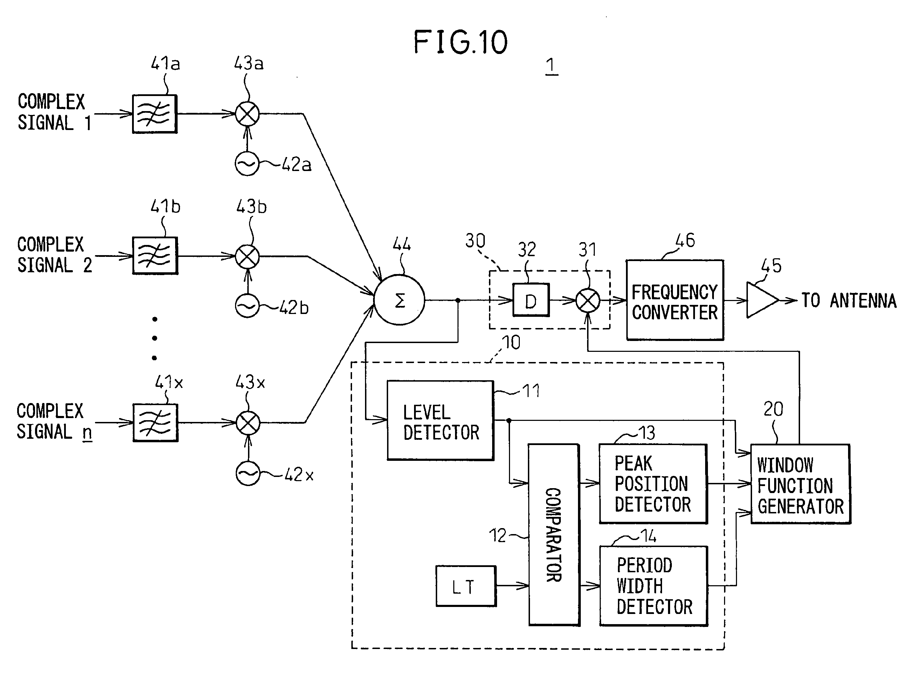

FIG. 10 is a schematic view of the configuration of a multicarrier signal transmission apparatus according to a fourth embodiment of the present invention. The transmission apparatus 1 shown in FIG. 10 is provided with a period width detector 14 at the peak detector 10. The period width detector 14 detects the period widths of the peak parts of the multicarrier signal when the level of the detected multicarrier signal is over the level threshold LT1. The period widths of the peak parts may be set as period widths whereby the level of the multicarrier signal becomes over the level threshold LT1, may be set as period widths whereby it becomes at least another suitable level threshold, or may be set by detecting the half amplitudes of the peak parts.

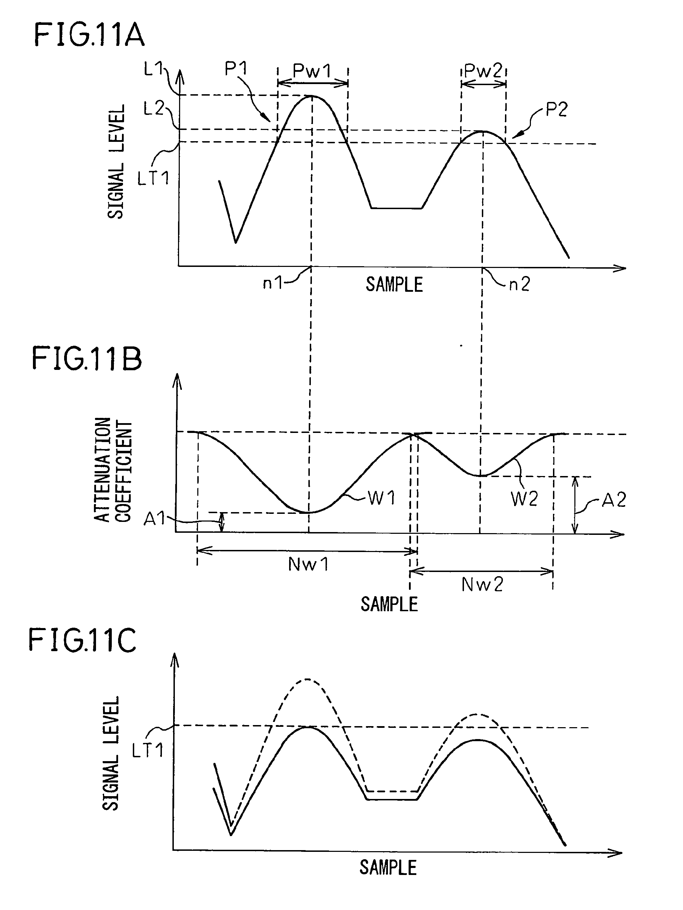

The window function generator 20 determines the amplitudes in accordance with the detected level and generates window functions matched with timings centered on the peak positions. At this time, the period widths of the window functions generated are changed in proportion to the period widths detected by the period width detector 14 for the peak parts. For example, as shown in FIG. 11A, assume that the peak part P1 of the multicarrier signal has a peak level L1 and a period width Pw1, while the peak part P2 has a peak level L2 and period width Pw2 (in this example, the period width is shown as a period width exceeding the level threshold LT1).

The window function generator 20 determines the amplitude A1 of the window function w1 applied to the peak part P1 in accordance with the detected peak level L1 and determines the period width Nw1 of the window function w1 in accordance with the detected period width Pw1. Further, it determines the amplitude A2 of the window function w2 applied to the peak part P2 in accordance with the detected peak level L2 and determines the period width Nw2 of the window function w2 in accordance with the detected period width Pw2.

By calculating the amplitudes, widths, etc. of the window functions in accordance with the magnitudes of the peak parts, it becomes possible to realize more flexible peak suppression and becomes possible to balance the quality of reception and ACLR optimally.

Note that in the above example, the window function generator 20 changed the period widths of the window functions proportionally to the period widths of the peak parts, but the invention is not limited to this. The window function generator 20 may also change the period widths of the window functions so that the period widths of the peak parts and period widths of the window functions have a simple monotonously increasing relationship. Further, the window function generator 20 may also change the period widths of the window functions in accordance with the ratios of the peak level values and period widths of the peak parts.

In the first to fourth embodiments, the window function generator 20 may also determine the values of the window functions at the different times by entering the sampling times in a predetermined calculation formula as in the above formula (1). By the window function generator 20 being able to freely calculate the types, shapes, widths, etc. of the window functions by a predetermined calculation formula in this way, it is possible to dynamically change the balance between the quality of reception and the ACLR.

On the other hand, the window function generator 20 may also store master window functions forming the basis for generating the window functions in advance in a window function table and use the values of the table to determine the value of the window functions. This enables elimination of the complicated function processing for generating the window functions, so realization by hardware becomes easy.

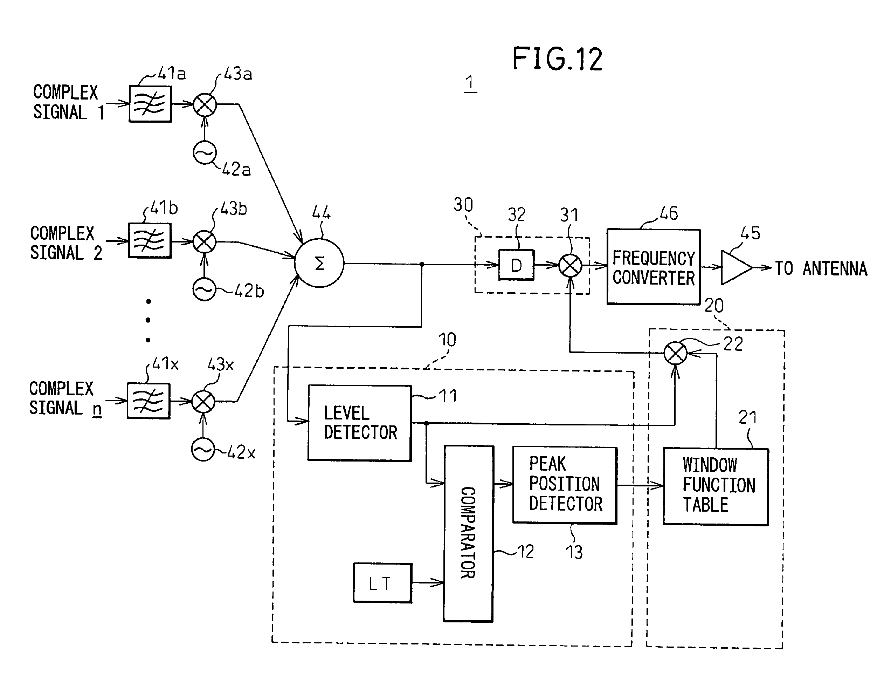

The configuration for generating window functions by such a window function table will be shown in FIG. 12.

FIG. 12 is a schematic view of the configuration of a multicarrier signal transmission apparatus according to a fifth embodiment of the present invention. In this embodiment, the window function generator 20 of the transmission apparatus 1 is provided with a window function table 21 realized by storing master window functions in a ROM, RAM, or other storage unit and a multiplier for multiplying the peak levels of peak parts detected by the level detector 11 with a value of a function stored in the window function table 21.

Here, a "master window function" is a function forming the basis for an actual window function and used by the window function generator 20 for generating an actual window function used for attenuation of a multicarrier signal and includes for example shape features of actual window functions. In particular, such a master window function is a function which can generate an actual window function by scaled in the time axis (sample axis direction, abscissa direction) and/or attenuation coefficient direction (ordinate direction). That is, it is a function which can generate an actual window function by changing the amplitude and/or changing the period width (sample width).

Table 1 shows an example of the content of the window function table 21.

Table 1. Example of Window Function Table

| Sample | Value of window function |
|---|---|
| 0 | 1.000 |
| 1 | 0.999 |
| 2 | 0.995 |
| 3 | 0.990 |
| 4 | 0.982 |
|  |  |
| 11 | 0.909 |
| 12 | 0.901 |
| 13 | 0.896 |

Table continued

| Sample | Value of window function |
|---|---|
| 14 | 0.892 |
| 15 | 0.891 |
| 16 | 0.892 |
| 17 | 0.896 |
| 18 | 0.901 |
| 19 | 0.909 |
|  |  |
| 26 | 0.982 |
| 27 | 0.990 |
| 28 | 0.995 |
| 29 | 0.999 |
| 30 | 1.000 |

The above example of a window function table is a window function table corresponding to the window functions shown in FIG. 6. Here, it is calculated assuming a=0.891 and a sample number Nw0 of 30.

As shown in Table 1, the window function table 21 stores function values at different times (sample numbers) calculated in advance by a calculation formula such as the above formula (1) (determined in accordance by a master window function) for a predetermined one or more master functions.

The window function generator 20 successively reads out values of the master window functions stored at the window function table 21 matched in timing so as to make the peak positions detected by the peak position detector 13 the centers of the window functions. By multiplying the peak levels of the peak parts detected by the level detector 11 with the read out function values, the amplitudes of the window functions in the table 21 are changed in accordance with the peak level to generate new window functions.

When employing window functions having symmetry as window functions applied to the peak parts of the multicarrier signal, it is also possible that the window function table 21 stores only part of the master window functions and the window function generator 20 generate all of the window functions from the part of the master window functions stored in the window function table based on the symmetry.

In this way, by storing only part of the master window functions, it becomes possible to save the storage capacity of the window function table 21. Further, the processing for generating all of the window functions from the part of the master window functions based on the symmetry of the functions is extremely simple, so the advantages of the fifth embodiment are not impaired.

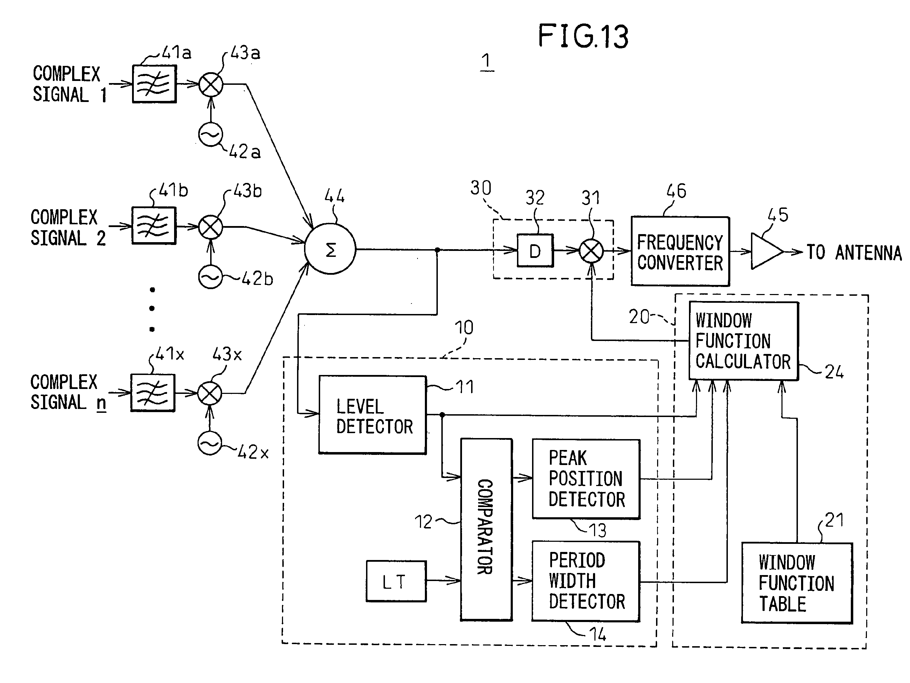

FIG. 13 is a schematic view of the configuration of a multicarrier signal transmission apparatus according to a sixth embodiment of the present invention which stores only part of the master window functions in the window function table and generates the remainder based on symmetry.

In the present embodiment, the window function generator 20 is provided with a window function table 21 storing only part of the master window functions and a window function calculator 24 for generating all of the window functions by simple processing based on symmetry of the master window functions from the master window functions stored in the window function table 21.

Here, as the window functions generated by the window function generator 20, window functions having symmetry are employed. The window functions already explained with reference to FIG. 6 also have symmetry, so a window function table 21 storing only part of the master window functions will be explained as an example of this.

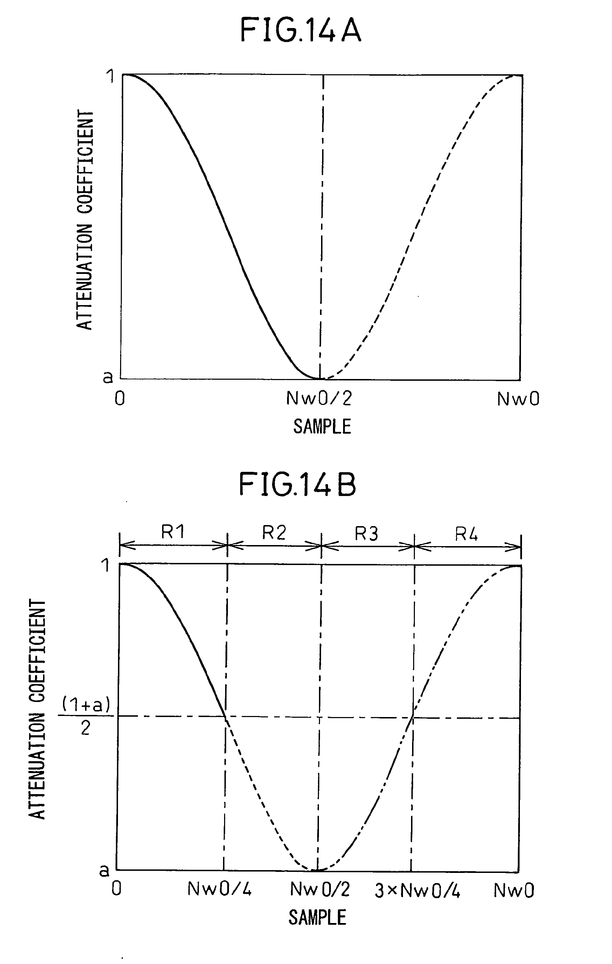

As shown in FIG. 14A, the window functions shown in FIG. 6 have linear symmetry about the sample no. (time) = Nw0/2. Therefore, only the half of the master window functions from sample no. 0 to Nw0/2 (shown by the solid line in FIG. 14A) is stored at the window function table 21. Further, when generating the remaining part of the master window functions (shown by the broken line in FIG. 14A), it is possible to read out the window function table 21 in the reverse order so as to generate the remaining part of the master window functions. This enables the table size to be reduced to about half.

As clear from FIG. 14B, the half part of the master window functions from the sample no. 0 to Nw0/2 also has point symmetry about the sample no. (time) = Nw0/4 and attenuation coefficient = (1+a)/2.

Therefore, only the one-quarter of the master window functions from the sample no. 0 to Nw0/4 (shown by the solid line in FIG. 14B) is stored in the master window function table 21. When generating the remaining part of the master window functions, it is possible to change the order of reading the window function table 21 and apply simple linear processing to the read out function values so as to generate the remaining part of the window functions.

Alternatively, it is possible to read out the window function table 21 while changing the order and add/subtract the thus read out function values with a constant so as to generate the remaining part of the window functions. This enables the table size to be reduced to about one-quarter.

For example, in the example shown in FIG. 14B, only the part defined in the range R1 ($0 \leq n \leq Nw0/4$; n is the sample no.) in the window functions corresponding to the window functions shown in FIG. 6 is stored in the window function table 21.

Further, when generating a master window function for the part of the range R2 ($Nw0/4 \leq n \leq Nw0/2$), the values of the function values read out in the reverse order from the window function table 21 subtracted from the constant (1+a) are computed as function values. Further, when generating master window functions for the part of the range R3 ($Nw0/2 \leq n \leq 3Nw0/4$), the values of the function values read out in the forward order from the window function table 21 subtracted from the constant (1+a) are used as function values. Further, when generating master window functions for the part of the range R4 ($3Nw0/4 \leq n \leq Nw0$), the values read out in the reverse order from the window function table 21 are used as function values.

The window function calculator 24 reads out part of the master window functions stored in the window function table 21 in this way and can compute all of the master window functions by simple linear processing of the window function table 21 while changing the read out order based on symmetry of the master window functions.

Further, the window function calculator 24 changes the amplitude of the master window functions in accordance with the detection level detected by the level detector 11, changes the period widths of the master window functions in accordance with the period widths of the peak parts detected by the period width detector 14, and generates window functions in accordance with the timing so as to multiply the centers of the window functions with the multicarrier signal at the peak positions detected by the peak position detector 13.

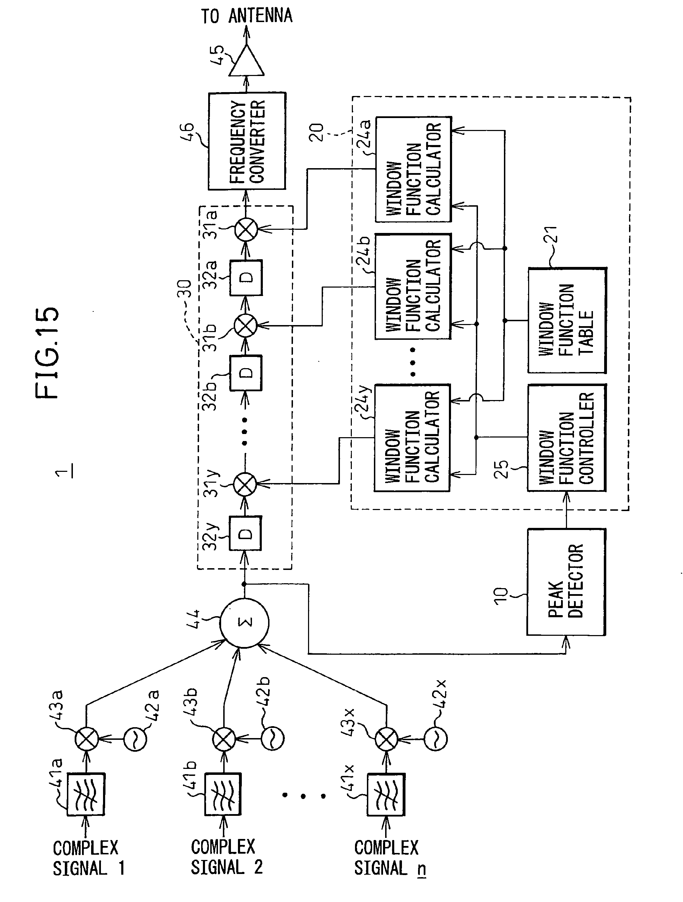

FIG. 15 is a schematic view of the configuration of a multicarrier signal transmission apparatus according to a seventh embodiment of the present invention. The transmission apparatus 1 according to the present embodiment can superpose the window functions generated at the plurality of peak parts appearing at different times (positions of samples) of the multicarrier signal and multiply them with the multicarrier signal.

Therefore, the window function generator 20 according to the present embodiment is provided with a window function table 21, a plurality of window function calculators 24a, 24b... 24y, and a window function controller 25 for controlling these window function calculators 24a to 24y.

Further, the peak suppressor 30 is provided with multipliers 31a, 31b... 31y for multiplying the window functions generated by the plurality of window function calculators 24a, 24b... 24y with the multicarrier signal and delay elements 32a, 32b... 32y.

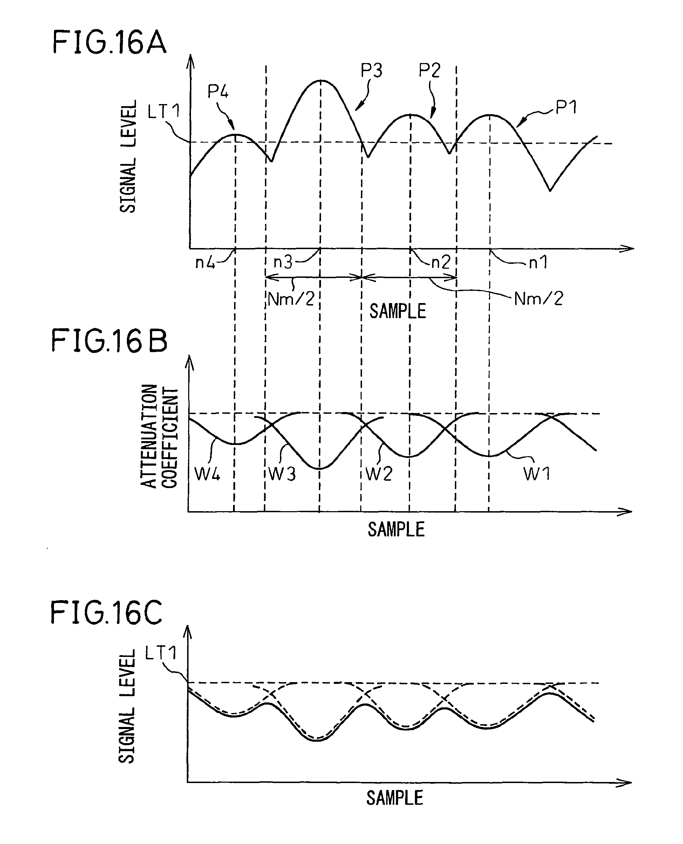

The operation of the multicarrier signal transmission apparatus 1 shown in FIG. 5 will be explained next referring to FIG. 16. Here, FIG. 16A shows a multicarrier signal before peak suppression, FIG. 16B shows window functions generated in accordance with the multicarrier signal of FIG. 16A, and FIG. 16C shows a multicarrier signal after peak suppression.

As shown in FIG. 16A, the multicarrier signal has a plurality of peak parts P1 to P4 appearing in it. Assume that window functions w1 to w4 are generated corresponding to the peak parts P1 to P4. Here, if the peak parts appear at intervals shorter than the maximum period width of the window functions, the window functions w1 to w4 can overlap as shown in FIG. 16B. In the illustrated example, the window functions w1 and w2, w2 and w3, and w3 and w4 overlap at their outskirts.

The transmission apparatus 1 according to the present embodiment generates window functions overlapping in time by different window function calculators 24a to 24y and multiplies these with the multicarrier signal by the multipliers 31a to 31y.

For example, when suppressing the peak parts P1 to P4 of the multicarrier signal of FIG. 16A, first, when the peak detector 10 detects the peak part P1 at the sample n1, the window function controller 25 causes the 1st window function calculator 24a to generate a window function w1 at a position centered at the sample n1. The window function controller 25 stores the fact that the window function calculator 24a is in the middle of generating a window function while the window function calculator 24a is generating the window function.

Next, when the peak detector 10 detects the peak part P2 at the sample n2, since the window function calculator 24a is generating a window function, the window function controller 25 causes the second window function calculator 24b to generate a window function w2 at a position centered at the sample n2. The window function controller 25 stores the fact that the window function calculator 24b is in the middle of generating a window function while the window function calculator 24b is generating the window function.

Further, when the window function generator 24a finishes generating the window function, the window function controller 25 clears the memory indicating that window function calculator 24a is generating the window function.

After this, if the peak detector 10 detects a peak part P3 at a sample n3, the window function controller 25 causes the 1st window function calculator 24a to generate the window function w3 at a position centered at the sample n3 again.

By providing the plurality of window function calculators 24a to 24y in this way, the transmission apparatus 1 according to the present embodiment superposes the function values at certain times of the window functions generated for the plurality of peak parts of the multicarrier signal and enables attenuation of the signal level of the multicarrier signal at that time in accordance with the superposed values. Due to this, it becomes possible to apply window functions to all peak parts appearing at short intervals.

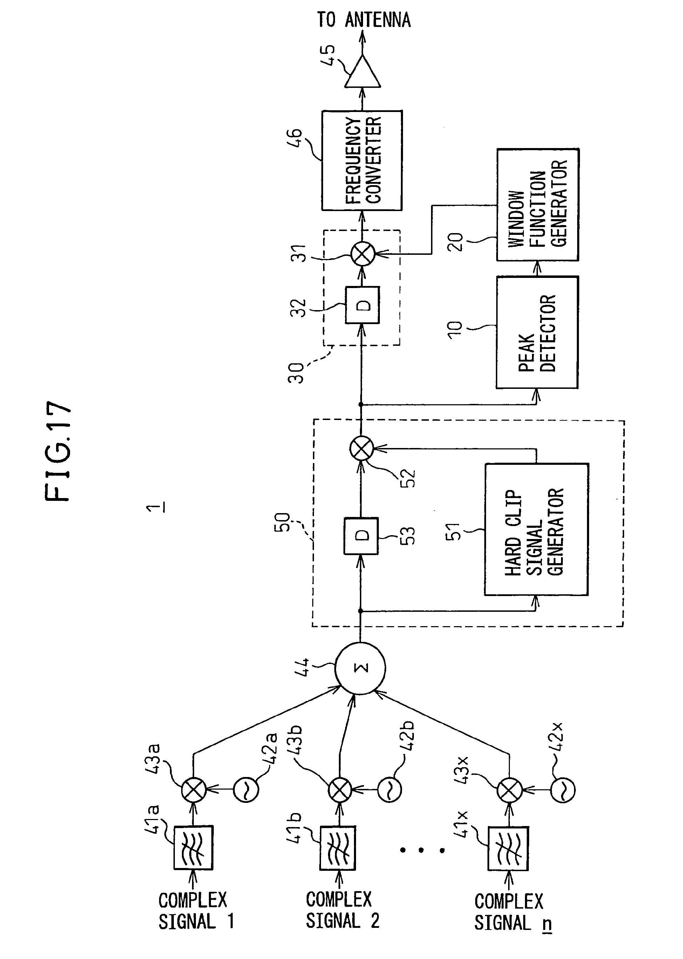

FIG. 17 is a schematic view of the configuration of a multicarrier signal transmission apparatus according to an eighth embodiment of the present invention. In this embodiment, before performing the above peak suppression using window functions, hard clip type peak suppression is performed for suppressing the peak parts of the multicarrier signal. That is, before the peak suppressor 30, a hard clip type peak suppression unit 50 is provided. As explained above, according to hard clip type peak suppression, the signal loss is suppressed to the minimum, so there are the advantages that the deterioration of the quality of reception is small and a relatively simple circuit is sufficient for realization. On the other hand, with hard clip type peak suppression, there are also the shortcomings that a high frequency component occurs in the multicarrier signal after suppression, a spurious wave out of the band is generated, and the ACLR is deteriorated, because of clipping by suppressing only a signal part exceeding a certain threshold level.

On the other hand, by peak suppression using the above window functions, it is possible to change the balance between the quality of reception and the ACLR by selection of the window functions. Therefore, by using both hard clip type peak suppression and peak suppression using the above window functions, it becomes possible to make use of the feature of hard clip type peak suppression, that is, the simplicity and low deterioration of the quality of reception, and suppress the deterioration of the ACLR. Due to this, it becomes possible to control the balance between the quality of reception and the ACLR well.

Further, by using for example differentiable smooth functions as the window functions and multiplying the window functions with the hard clipped multicarrier signal, it becomes possible to ease sharp fluctuations in the rate of change of the signal level at the hard clipped parts and suppress deterioration of the ACLR.

As shown in FIG. 17, the hard clip suppression unit 50 is provided with a hard clip signal generator 51, a multiplier 52 for multiplying the signal generated by the hard clip signal generator with the multicarrier signal, and a delay element 53 for delaying the multicarrier signal for the processing time of the hard clip signal generator 51.

The hard clip signal generator 51 detects the signal level of the multicarrier signal, compares the signal level and a predetermined level threshold LT2 set somewhat larger than the threshold LT1, and outputs the value of (LT2/(signal level)) when the signal level of the multicarrier signal exceeds the threshold LT2 and the constant 1 (equal magnitude) when it does not.

By multiplying this signal with the multicarrier signal by the multiplier 52, only the signal parts exceeding the level of the threshold LT2 are suppressed to the threshold LT2 to clip the same.

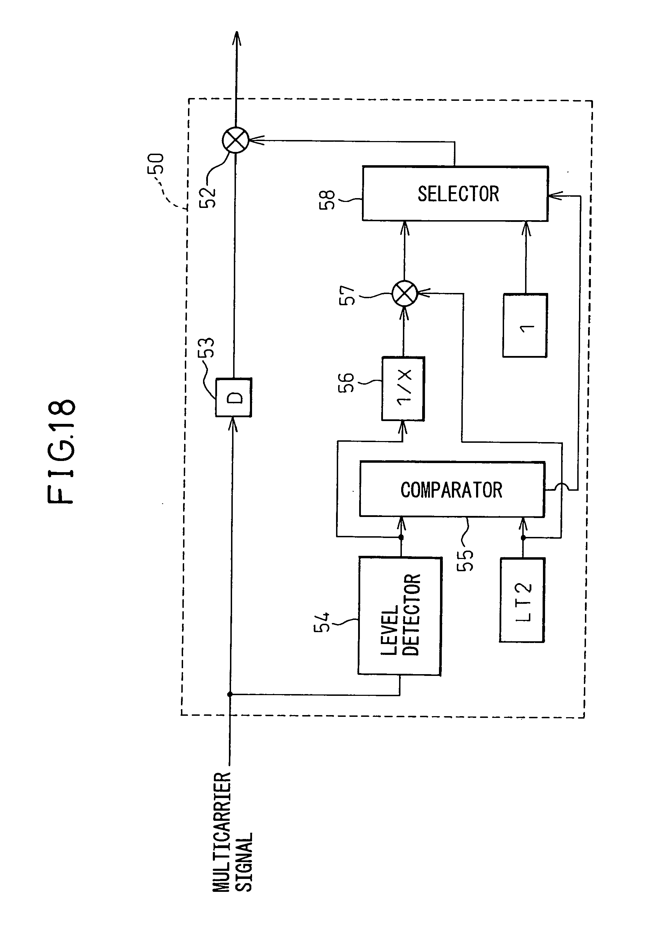

FIG. 18 is a view of the basic configuration of the hard clip suppression unit 50 of FIG. 17. The hard clip suppression unit 50 is provided with a level detector 54 for detecting the signal level of a multicarrier signal, a comparator 55 for comparing the signal level of the multicarrier signal and a predetermined level threshold LT2 and outputting the result of comparison, a reciprocal calculator 56 for calculating the reciprocal of the signal level of the multicarrier signal, a multiplier 57 for multiplying the reciprocal of the signal level of the multicarrier signal and the threshold LT2 (LT2/(signal level)), and a selector 58 for selecting the value of (LT2/(signal level)) when the signal level of the multicarrier signal exceeds the threshold LT2 and the constant 1 when it does not, in accordance with the result of comparison by the comparator 55.

Note that the above hard clip suppression unit 50 is shown as only one example. The hard clip suppression unit used in the present invention is not limited to this.

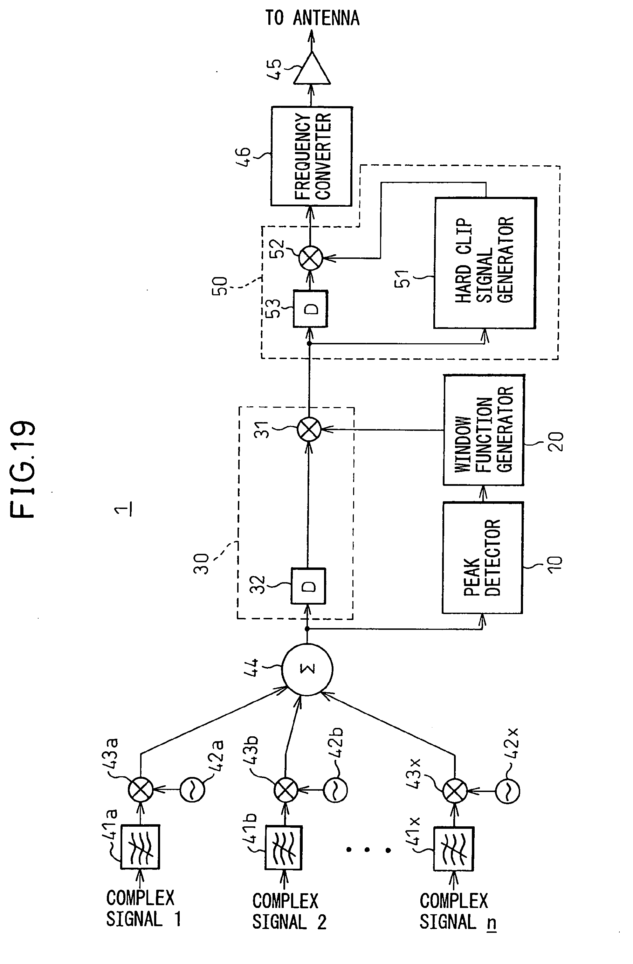

FIG. 19 is a schematic view of the configuration of a multicarrier signal transmission apparatus according to a ninth embodiment of the present invention. In the present embodiment, the above peak suppression using window functions is performed, then hard clip type peak suppression is performed. That is, the transmission apparatus 1 is provided with a hard clip type peak suppression unit 50 after the peak suppressor 30.

In this way, by performing peak suppression by the window functions in advance before the hard clip type peak suppression and reducing the signal parts for clipping by hard clip type peak suppression, it becomes possible to make use of the feature of hard clip type peak suppression, that is, the simplicity and low deterioration of the quality of reception, and suppress the occurrence of a spurious wave out of the band. Due to this, it becomes possible to control the balance between the quality of reception and the ACLR well.

Note that the peak suppression unit 50 according to the ninth embodiment may be configured similar to the peak suppression unit shown in the above eighth embodiment (however, in the case of this embodiment, the threshold LT2 being set smaller than the threshold LT1).

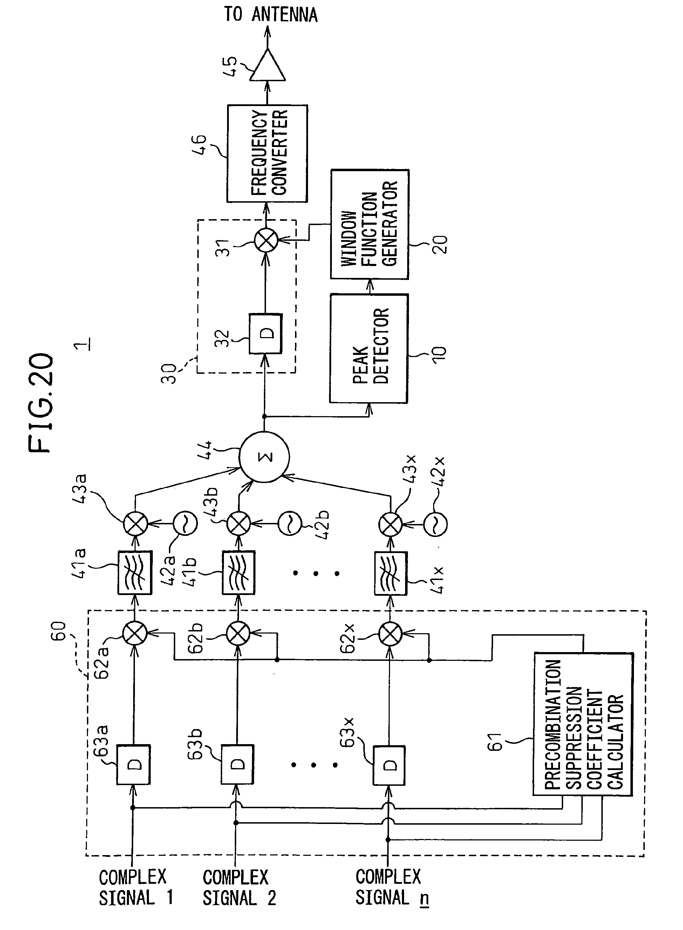

FIG. 20 is a schematic view of the configuration of a multicarrier signal transmission apparatus according to a 10th embodiment of the present invention. This embodiment performs the peak suppression by window functions and the peak suppression before multicarrier combination together.

That is, the transmission apparatus 1 according to the present embodiment is provided with, in addition to the peak suppressor 30 using window functions explained above, a precombination suppression coefficient calculator 61 for simulating a multicarrier signal occurring when limiting the bands of, then combining the digital signals comprised of the complex signal 1 to complex signal $n$ based on the same so as to determine the peak parks and computing the suppression coefficients (attenuation coefficients) to be applied to the segments of the complex signal 1 to complex signal $n$ corresponding to the determined peak parts, multipliers 62a, 62b... 62x for multiplying the suppression coefficients for the complex signals 1 to $n$ computed by the precombination suppression coefficient calculator 61 with the complex signals (1 to $n$), and delay elements 63a, 63b... 63x for delaying the complex signals 1 to $n$ by exactly the processing time of the precombination suppression coefficient calculator 61.

As explained above, the peak suppression before multicarrier combination has the advantage of there being no deterioration of the ACLR since the peak suppression is applied before the band-limiting filters 41a, 41b... 41x, but has the disadvantage that the deterioration of the quality of reception is large since the amount of information lost due to peak suppression is large.

In the present embodiment, by performing peak suppression by the above window function along with peak suppression before multicarrier combination, it becomes possible to make use of the feature of peak suppression before multicarrier combination, that is, the low deterioration of the ACLR, and further suppress deterioration of the quality of reception. Due to this, it becomes possible to control the balance between the quality of reception and ACLR well.

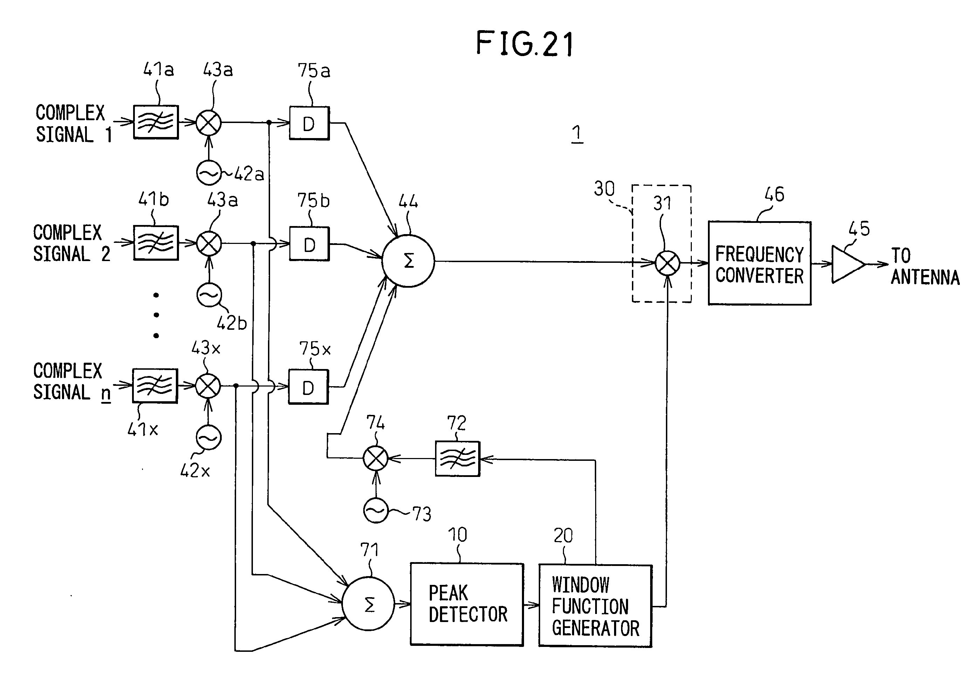

FIG. 21 is a schematic view of the configuration of a multicarrier signal transmission apparatus according to an 11th embodiment of the present invention. The transmission apparatus 1 of the present embodiment transmits the generation parameters of the window functions such as the amplitudes, period widths, and types of the window functions used at the time of peak suppression using window functions to the receiving side along with the multicarrier signal.

By sending the generation parameters of the window functions along with the multicarrier signal, the receiving side can receive these, reproduce the window functions used for the peak suppression, and use the window functions to reproduce the multicarrier signal before peak suppression. Due to this, it becomes possible to prevent the deterioration of the quality of reception accompanying the peak suppression.

Therefore, the transmission apparatus 1 is provided with a first multicarrier combiner 71 for generating a multicarrier signal generated when combining the band-limited complex signal 1 to complex signal $n$, a peak detector 10 for detecting the peak parts of the multicarrier signal combined by the first multicarrier combiner 71, a window function generator 20 for generating window functions in accordance with the detected peak parts, a band-limiting filter 72 for over sampling, then band limiting the digital format generation parameter signal including the generation parameters for the window functions used for generation of the window functions by the window function generator 20, and a sine wave generator 73 and complex multiplier 74 for shifting the frequency of (up-converting) the band-limited generation parameter signal.

Further, the transmission apparatus 1 is provided with sine wave generators 42a, 42b... 42x and complex multipliers 43a, 43b... 43x for shifting the frequencies of the complex signal 1, complex signal 2... complex signal $n$ to different frequency bands.

Further, it is provided with delay elements 75a, 75b... 75x for delaying the complex signal 1, complex signal 2... complex signal $n$ by exactly the processing times of the first multicarrier combiner 71, peak detector 10, window function generator 20, band-limiting filter 72, sine wave generator 73, and complex multiplier 74.

The transmission apparatus 1 combines the frequency-shifted and band-limited complex signal 1 to complex signal $n$ and the generation parameter signal by the second multicarrier combiner 44 and multiplies the obtained multicarrier signal with the window functions generated by the window function generator 20 by the multiplier 31 to attenuate the peak parts of the multicarrier signal in accordance with the values of the window functions for peak suppression. Further, it converts the peak suppressed multicarrier signal by the frequency converter 46 to the wireless frequency band, then amplifies it to the desired transmission power by the transmission amplifier 45 and sends it to the antenna.

The window function generator 20 generates predetermined types of window functions having amplitudes and period widths in accordance with the peak levels and period widths of the peak parts detected by the peak detector 10 and generates a generation parameter signal as a digital signal including the generation parameters required for generation of the window functions. The "generation parameters of the window functions" here may include the amplitudes, period widths, and types of the window functions.

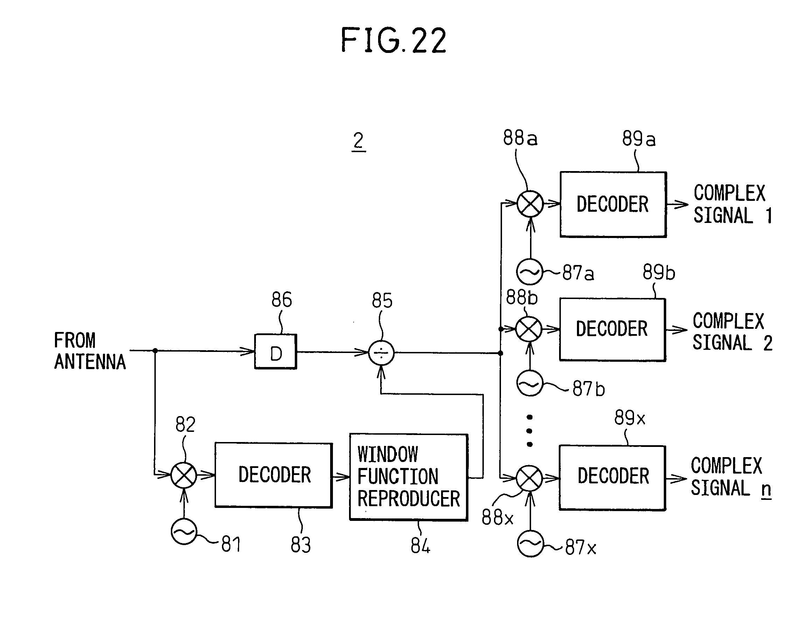

FIG. 22 is a schematic view of the configuration of a multicarrier signal receiving apparatus according to a 12th embodiment of the present invention. The receiving apparatus 2 receives a multicarrier signal sent from the transmission apparatus 1 shown in FIG. 21. Further, it decodes the generation parameters of the window functions used for suppression of the peak parts, which is appearing in the signal from the received multicarrier signal and reproduces the window functions from the decoded generation parameters. Further, it uses the window functions to reproduce the multicarrier signal before peak suppression.

Therefore, the receiving apparatus 2 is provided with a local oscillator 81 and mixer 82 for shifting the frequency of the received multicarrier signal to make the subcarrier including the generation parameter signal the baseband frequency, a decoder 83 for decoding the generation parameter signal, a window function reproducer 84 for reproducing window functions used at the time of peak suppression of the received multicarrier signal, based on the decoded generation parameter signal, a divider 85 for dividing the multicarrier signal by the generated window functions to restore the multicarrier signal to the state before peak suppression, and a delay element 86 for delaying the multicarrier signal for exactly the processing time required for decoding the generation parameter signal and generating the window functions.

Further, the receiving apparatus 2 shifts the frequency of the restored multicarrier signal by the local oscillators 87a, 87b,... 87x and the mixers 88a, 88b... 88x to shift the subcarriers including the complex signals 1, 2... $n$ to the baseband frequency. Further, it decodes the frequency shifted signals by the decoders 89a, 89b... 89x to obtain the complex signals 1, 2... n.

The present invention can be broadly applied to transmission/receiving apparatuses, transmission/receiving methods, and communication systems for signals combining pluralities of modulated signals, but is particularly suitably applied to the CDMA communication scheme (including W-CDMA scheme) for utilizing a multicarrier signal for high speed packet transmission.

While the invention has been described with reference to specific embodiments chosen for purpose of illustration, it should be apparent that numerous modifications could be made thereto by those skilled in the art without departing from the basic concept and scope of the invention.

**Claims**

1. A multicarrier signal transmission apparatus for limiting the bands of a plurality of modulated signals, combining these, and transmitting the obtained multicarrier signal, comprising:

   a peak detection unit (10) for detecting a peak part of said multicarrier signal,
   a window function generation unit (20) for generating a window function of an amplitude in accordance with a peak level of said peak part, and
   a peak suppression unit (30) for attenuating said peak part in accordance with the value of said window function.

2. A multicarrier signal transmission apparatus as set forth in claim 1, wherein said window function generation unit (20) generates a window function of a period width in accordance with a period width of the detected peak part.

3. A multicarrier signal transmission apparatus as set forth in claim 1, wherein
   the apparatus is further comprising a window function table (21) storing values of a master window function for generating said window function and
   said window function generation unit (20) generates a window function by changing an amplitude of the window function in said table in accordance with a peak level of said detected peak part.

4. A multicarrier signal transmission apparatus as set forth in claim 3, wherein said window function generation unit (20) generates said window function by changing a period width of said master window function in accordance with a period width of said detected peak part.

5. A multicarrier signal transmission apparatus as set forth in claim 3, wherein
   said window function table (21) stores part of window functions having symmetry, and
   said window function generation unit (20) generates all of said window functions based on said symmetry from said part of the window functions stored in said window function table (21).

6. A multicarrier signal transmission apparatus as set forth in claim 1, wherein said peak suppression unit (30) superposes function values at certain times of said window functions generated on the plurality of peak parts of said multicarrier signal and attenuates the signal level of said multicarrier signal at said times in accordance with the superposed values.

7. A multicarrier signal transmission apparatus as set forth in claim 1, wherein said window function is any one of a cos window function, $\cos^2$ window function, $\cos^3$ window function, $\cos^4$ window function, Hanning window function, Hamming window function, Kaiser window function, and Blackman-Harris window function.

8. A multicarrier signal transmission apparatus as set forth in claim 1, further comprising a hard clip suppression unit (50) for suppressing said peak part of said multicarrier signal before attenuation of said peak part by said peak suppression unit (30).

9. A multicarrier signal transmission apparatus as set forth in claim 1, further comprising a hard clip suppression unit (50) for suppressing said peak part of said multicarrier signal after attenuation of said peak part by said peak suppression unit (30).

10. A multicarrier signal transmission apparatus as set forth in claim 1, further comprising:

   a peak part determining unit (61) for determining a peak part of a multicarrier signal when combining a plurality of modulated signals based on those signals and
   a modulated signal attenuating unit (62a, 62b, 62x) for attenuating a signal level of a part of each of said plurality of modulated signals corresponding to the determined peak part.

11. A multicarrier signal transmission apparatus as set forth in claim 1, transmitting generation parameters including any of an amplitude, period width, and type of a window function used for generation of said window function by said window function generation unit (20) along with said multicarrier signal to a receiving side.

12. A multicarrier signal receiving apparatus for receiving a multicarrier signal transmitted from the multicarrier signal transmission apparatus set forth in claim 11, comprising:

   a window function reproducing unit (84) for reproducing said window function based on said transmitted generation parameters and
   a signal restoring unit (85) for restoring said multicarrier signal in accordance with said reproduced window function.

13. A multicarrier signal transmission method for limiting bands of a plurality of modulated signals, combining these, and transmitting an obtained multicarrier signal, comprising:

   detecting a peak part of said multicarrier signal,
   generating a window function of an amplitude in accordance with a peak level of said peak part, and
   attenuating said peak part in accordance with the value of said window function.

14. A multicarrier signal transmission method as set forth in claim 13, further comprising generating said window function by generating a window function of a period width in accordance with a period width of said detected peak part.

15. A multicarrier signal transmission method as set forth in claim 13, further comprising
storing values of a master window function for generating said window function in a window function table in advance and
 generating said window function by changing an amplitude of the window function in said table in accordance with a peak level of said detected peak part so as to generate the window function.

16. A multicarrier signal transmission method as set forth in claim 15, further comprising generating said window function by changing a period width of the master window function in accordance with a period width of said detected peak part so as to generate the window function.

17. A multicarrier signal transmission method as set forth in claim 15, comprising
storing a part of window functions having symmetry in said window function table, and
generating all of said window functions based on said symmetry from said part of the window functions stored in said window function table.

18. A multicarrier signal transmission method as set forth in claim 13, comprising superposing function values at certain times of said window functions generated on the plurality of peak parts of said multicarrier signal and attenuating the signal level of said multicarrier signal at said times in accordance with the superposed values.

19. A multicarrier signal transmission method as set forth in claim 13, further comprising using as said window function any one of a cos window function, $\cos^2$ window function, $\cos^3$ window function, $\cos^4$ window function, Hanning

window function, Hamming window function, Kaiser window function, and Blackman-Harris window function.

20. A multicarrier signal transmission method as set forth in claim 13, further comprising hard clip suppressing said peak part of said multicarrier signal before attenuation of said peak part in accordance with the value of said window function.

21. A multicarrier signal transmission method as set forth in claim 13, further comprising hard clip suppressing said peak part of said multicarrier signal after attenuation of said peak part in accordance with the value of said window function.

22. A multicarrier signal transmission method as set forth in claim 13, further comprising
determining a peak part of a multicarrier signal when combining a plurality of modulated signals based on those signals and
attenuating a signal level of a part of each of said plurality of modulated signals corresponding to the determined peak part.

23. A multicarrier signal transmission method as set forth in claim 13, further comprising transmitting generation parameters including any of an amplitude, period width, and type of a window function used for generation of said window function along with said multicarrier signal to a receiving side.

24. A multicarrier signal receiving method for receiving a multicarrier signal transmitted by a multicarrier signal transmitting method as set forth in claim 23, comprising
reproducing said window function based on said transmitted generation parameters and
restoring said multicarrier signal in accordance with said reproduced window function.

25. A communication system having a multicarrier signal transmission apparatus (1) for limiting the bands of a plurality of modulated signals, combining these, and transmitting an obtained multicarrier signal to a receiving side,
said multicarrier signal transmission apparatus (1) comprising:

a peak detecting unit (10) for detecting a peak part of said multicarrier signal,
a window function generation unit (20) for generating a window function of an amplitude in accordance with a peak level of said peak part, and
a peak suppressing unit (30) for attenuating said peak part in accordance with the value of said window function.

26. A communication system as set forth in claim 25, wherein said window function generation unit (20) generates a window function of a period width in accordance with a period width of said detected peak part.

27. A communication system as set forth in claim 25, wherein
said multicarrier signal transmission apparatus (1) is further comprising a window function table (21) for storing values of by a master window function for generating said window function, and
said window function generation unit (20) changes an amplitude of the window function in said table in accordance with the peak level of said detected peak part to generate the window function.

28. A communication system as set forth in claim 27, wherein said window function generation unit (20) changes a period width of said master window function in accordance with a period width of said detected peak part to generate the window function.

29. A communication system as set forth in claim 27, wherein
said window function table (21) stores part of window functions having symmetry, and
said window function generation unit (20) generates all of said window functions based on said symmetry from said part of the window functions stored in said window function table (21).

30. A communication system as set forth in claim 25, wherein said peak suppression unit (30) superposes function values at certain times of said window functions generated on the plurality of peak parts of said multicarrier signal and attenuates the signal level of said multicarrier signal at said times in accordance with the superposed values.

31. A communication system as set forth in claim 25, wherein said window function is any one of a cos window function, $\cos^2$ window function, $\cos^3$ window function, $\cos^4$ window function, Hanning window function, Hamming window function, Kaiser window function, and Blackman-Harris window function.

**32.** A communication system as set forth in claim 25, wherein said multicarrier signal transmission apparatus (1) is further comprising a hard clip suppression unit (50) for suppressing said peak part of said multicarrier signal before attenuation of said peak part by said peak suppression unit (30).

**33.** A communication system as set forth in claim 25, wherein said multicarrier signal transmission apparatus (1) is further comprising a hard clip suppression unit (50) for suppressing said peak part of said multicarrier signal after attenuation of said peak part by said peak suppression unit (30).

**34.** A communication system as set forth in claim 25, wherein said multicarrier signal transmission apparatus (1) is further comprising:

a peak part determining unit (61) for determining a peak part of a multicarrier signal when combining a plurality of modulated signals based on those signals and
a modulated signal attenuating unit (62a, 62b, 2x) for attenuating a signal level of a part of each of said plurality of modulated signals corresponding to the determined peak part.

**35.** A communication system as set forth in claim 25, wherein
said communication system further has a multicarrier signal receiving apparatus (2) for receiving said multicarrier signal transmitted from said multicarrier signal transmission apparatus (1),
said multicarrier signal transmission apparatus (1) transmits generation parameters including any of an amplitude, period width, and type of a window function used for generation of said window function by said window function generation unit along with said multicarrier signal to said multicarrier signal receiving apparatus (2), and
said multicarrier signal receiving apparatus (2) is comprising:

a window function reproducing unit (84) for reproducing said window function based on said transmitted generation parameters and
a signal restoring unit (85) for restoring said multicarrier signal in accordance with said reproduced window function.

# FIG.1

MULTICARRIER
SIGNAL

PEAK
SUPPRESSOR
30

PEAK
DETECTOR
10

WINDOW
FUNCTION
GENERATOR
20

# FIG.2

# FIG. 3A

# FIG. 3B

# FIG. 3C

# FIG.4

<u>100</u>

```
        1                              2
IN →│MULTICARRIER SIGNAL│  →│MULTICARRIER SIGNAL │→ OUT
     │TRANSMISSION       │    │RECEIVING APPARATUS │
     │APPARATUS          │    │                    │
```

# FIG.5

EP 1 672 859 A2

# FIG.6

FIG.7A

SIGNAL LEVEL

L1
L2
LT1

P1

P2

n1

SAMPLE

n2

FIG.7B

ATTENUATION COEFFICIENT

1

A1

W1

W2

A2

Nw0

SAMPLE

FIG.7C

SIGNAL LEVEL

LT1

SAMPLE

## FIG. 8

COMPLEX SIGNAL 1 → 41a → 43a
42a

COMPLEX SIGNAL 2 → 41b → 43b
42b

COMPLEX SIGNAL n → 41x → 43x
42x

44 Σ

30
32 D
31

46 FREQUENCY CONVERTER

45 → TO ANTENNA

10

11 LEVEL DETECTOR

12 COMPARATOR

LT1

13 PEAK POSITION DETECTOR

20 WINDOW FUNCTION GENERATOR

EP 1 672 859 A2

FIG.9A

FIG.9B

FIG.9C

# FIG.10

EP 1 672 859 A2

## FIG.11A

## FIG.11B

## FIG.11C

## FIG.12

# FIG.13

EP 1 672 859 A2

## FIG.14 A

## FIG.14 B

FIG.15

EP 1 672 859 A2

FIG.16A

FIG.16B

FIG.16C

# FIG.17

# FIG.18

MULTICARRIER
SIGNAL

D — 53

52 — ⊗

50

54 — LEVEL DETECTOR

55 — COMPARATOR

LT2

56 — 1/X

57 — ⊗

1

58 — SELECTOR

EP 1 672 859 A2

# FIG.19

EP 1 672 859 A2

# FIG.20

EP 1 672 859 A2

# FIG.21

EP 1 672 859 A2

# FIG.22

EP 1 672 859 A2

# FIG.23